# EUROPEAN PATENT SPECIFICATION

(11) **EP 3 018 433 B1**
(45) Date of publication and mention of the grant of the patent: **12.02.2025**
(21) Application number: 15192267.1
(22) Date of filing: 30.10.2015
(51) Int. Cl.: F25B 27/02, F25B 15/02, F25B 23/00

(54) **SYSTEM AND METHOD FOR PROVIDING AIR-COOLING, AND RELATED POWER GENERATION SYSTEMS**
SYSTEM UND VERFAHREN ZUR BEREITSTELLUNG VON LUFTKÜHLUNG UND ZUGEHÖRIGE STROMERZEUGUNGSSYSTEME
SYSTÈME ET PROCÉDÉ DE REFROIDISSEMENT D'AIR DE FOURNITURE ET SYSTÈMES DE GÉNÉRATION DE PUISSANCE ASSOCIÉS

(30) Priority: 04.11.2014 US 201462074877 P; 12.10.2015 US 201514880520
(43) Date of publication of application: 11.05.2016
(73) Proprietor: General Electric Technology GmbH, 5400 Baden (CH)
(72) Inventor: TANG, Ching-Jen, Niskayuna, NY New York 12309 (US); SHAPIRO, Andrew Philip, Niskayuna, NY New York 12309 (US)
(74) Representative: Novagraaf Group

(56) References cited:
- JP-A- 2003 021 419
- US-A- 5 655 373
- US-A1- 2004 118 125
- US-A1- 2010 293 973
- US-A1- 2011 088 399
- US-A1- 2011 173 947
- US-A1- 2013 186 117
- US-B1- 6 422 018
- BIES D: "VERDICHTUNGSLUFTKUEHLUNG MIT ABSORPTIONSKAELTETECHNIK", BWK BRENNSTOFF WARME KRAFT, SPRINGER VDI VERLAG, DUSSELDORF, DE, vol. 56, no. 6, 1 January 2004 (2004-01-01), pages 66 - 70, XP001196599, ISSN: 1618-193X

## Description

### BACKGROUND

This invention is generally directed to methods and systems for cooling air. In some specific embodiments, the invention is related to air-cooling systems useful for incorporation into power generation systems.

JP 2003-021419 A discloses an absorption heat pump comprising an evaporator and an absorber that are connected with one another by means of a conduit for providing water vapor from the evaporator to the absorber. The absorber is in addition in flow connection with a regenerator device. The evaporator is fluidically connected to an indoor cooling unit. Make-up water may be supplied by a separate water supply passage into the evaporator.

US 5 655 373 A discloses a gas turbine intake air cooling apparatus comprising an air cooler and an absorber that are in communication with one another. For evaporation water films are created flowing down into heat transfer tubes, thereby cooling combustion air of a gas turbine. The water vapor is absorbed by the absorber and subsequently condensed by means of a condenser.

Other cooling systems are, for example, known from US 2011/0173947 A1 or US 6 422 018 B1. In these systems a condenser is provided as part of the cooling system. Such systems are complex.

A large number of industries require cooled air that is also dry. Examples include beverage manufacturers such as breweries; as well as food packaging and storage facilities. Moreover, homes, apartment buildings, municipal buildings, and countless office buildings and indoor-recreational facilities throughout the world require air-conditioning systems that can provide a highly controlled environment, in terms of air temperature and humidity.

Yet another important use for cooled air can be found in the case of "air-breathing" engines, such as gas turbines. Gas turbine engines are used in many applications, including aircraft, power generation, and marine systems. (The desired engine operating characteristics vary, of course, from application to application). When these types of engines operate in an environment in which the ambient temperature is reduced in comparison to other environments, the engines are usually capable of operating with a higher shaft horse power (SHP) and an increased output, without increasing the core engine temperature to unacceptably high levels. Conversely, when the ambient temperature (air inlet temperature) is increased, the efficiency of the engine can decrease dramatically. For example, for certain types of gas turbine engines, a 50°F (10°C) increase in ambient temperature can cause more than a 25% loss of power. Moreover, the temperature increase can lead to increased fuel consumption, as well as higher levels of NOx emissions.

To address the need for cool, dry air for all of these purposes, a large number of systems and techniques have been developed. Many of these techniques rely on vapor compression systems that take advantage of the expansion and compression of a refrigerant to provide cooling for ambient spaces. Another type of system uses a hydroscopic material, such as a desiccant, to remove water from an airstream, cooling the ambient environment. Various combinations of these systems have also been developed. Evaporative cooling techniques are especially attractive in some circumstances, in that they don't rely on energy-intensive, mechanical compression.

However, challenges remain in the design of systems based on evaporative cooling techniques - even the more advanced systems that have been developed recently. The systems are often complex, relying on a closed-loop design that often requires a condenser as part of a refrigeration unit within the system. The evaporator design can also involve some complexities, requiring at least one built-in cooling system within the unit. Furthermore, in the case of larger power generation systems now being developed, cooling systems with an even greater capacity for delivering cooled air to an engine compressor will be necessary in the future. Thus, improved systems and processes would be welcome in the art.

### SUMMARY OF THE INVENTION

One embodiment of the invention is directed to a cooling system for providing chilled air according to claim 1.

Another embodiment of the invention is directed to a gas turbine engine comprising the inventive cooling system.

Still another embodiment of the invention is directed to a method for providing chilled air to a gas turbine engine according to claim 14.

### DESCRIPTION OF THE DRAWINGS

FIG. 1 is a schematic of a cooling system according to one embodiment of the invention.
FIG. 2 is a cross-sectional depiction of an evaporator/absorber unit for a cooling system according to some embodiments of the invention.
FIG. 3 is a schematic of a cooling system according to another embodiment of the invention.

### DETAILED DESCRIPTION

In regard to this disclosure, any ranges disclosed herein are inclusive and combinable (e.g., compositional ranges of "up to about 25 wt%", or more specifically, "about 5 wt% to about 20 wt%", are inclusive of the endpoints and all intermediate values of the ranges). Moreover, the terms "first," "second," and the like, herein do not denote any order, quantity, or importance, but rather are used to distinguish one element from another. The terms "a" and "an" herein do not denote a limitation of quantity, but rather denote the presence of at least one of the referenced items. Moreover, approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

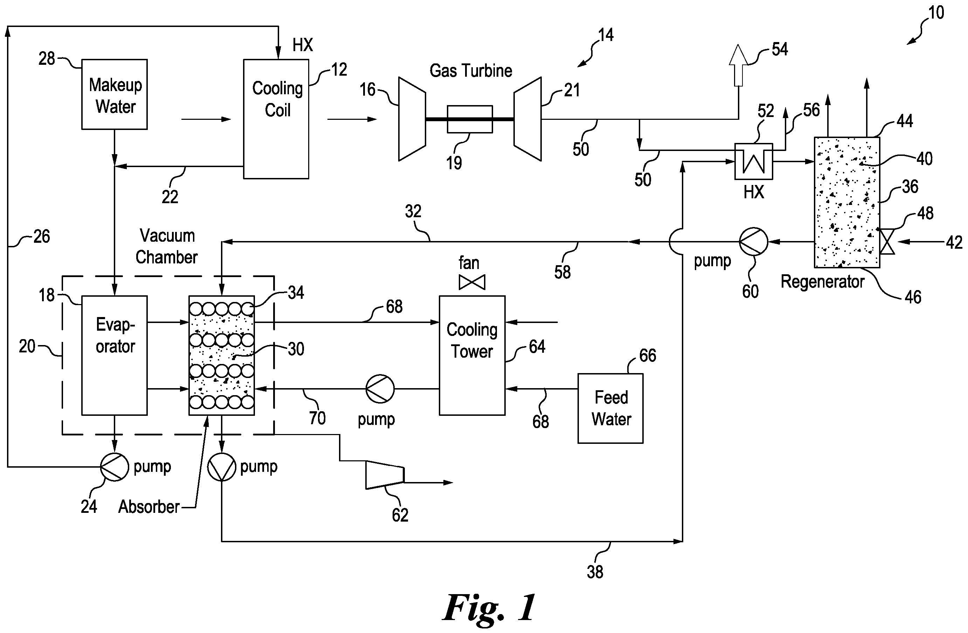

FIG. 1 is a schematic, cross-sectional view of a cooling system 10 according to one embodiment of the present invention. The system includes a cooling coil 12 that is configured to accept air at a higher temperature and then emit air at a lower temperature. The lower-temperature air can be used for a variety of purposes, as illustrated previously. Non-limiting examples include air-conditioning systems used in a wide variety of stationary locations; vehicles; machines; and other devices. In many instances, the cooling system can lower the temperature of air by about 2°C to 35°C, depending, of course, on the end use application.

As also explained above, one important use for the cooling system is a power generation device that requires an inflow of air, such as a gas turbine engine 14, shown in FIG. 1. A decrease in the temperature of the inlet air directed into compressor 16 can provide much greater power and efficiency for the engine. As one example for an industrial gas turbine, a cooling system like that described herein can lower the temperature of ambient air (e.g., air as hot as about 40°C) to a temperature in the range of about 10-15°C. For many applications, this would be referred to as "chilled" air.

Coolant coil 12 usually includes one or more tubes or conduits through which cold water flows, interacting with the relatively warm air, and providing the cooling effect that results in the chilled air. Cooling coils of this type are known in the art, and can often be thought of as "air-to-water heat exchangers". The transfer of heat from the air to the water results in a content of relatively warm water, as compared to the initially-cold water.

The relatively warm water from the cooling coil (along with make-up water, as described below) is directed through an evaporator 18. The evaporator is usually contained within a conventional type of vacuum chamber 20. (Any suitable conduit/pipe 22 can be used to channel the water to the evaporator). Various types of evaporators can be used for the present invention; and all perform the general function of converting at least a portion of a liquid medium into its gaseous form, i.e., by absorbing heat from the warm water. Non-limiting examples of suitable evaporator-types include falling film evaporators (e.g., falling film plate evaporators) and multiple-effect evaporators. In some preferred embodiments, the evaporator is configured to absorb enough heat from the warm water to lower the temperature of the water by at least about 2°C. Moreover, preferred embodiments call for the evaporator itself to be configured to function in the absence of a cooling coil. Additional information regarding preferred evaporator systems is provided below. The cooled water can then be pumped back (e.g., using pump 24) to the cooling coil 12, for re-use, via conduit 26, for example.

According to the invention, cooling system 10 includes an external source of make-up water 28. The make-up water replenishes water lost during any cycle in operation of the system, e.g., during operation of the evaporation or absorption cycles; along with water which will be lost during passage of water or vapor through any conduits in the system. It is usually introduced from any suitable supply at ambient temperature. According to the invention, the make-up water combines with warm water exiting the cooling coil via conduit 22, and the combined flow enters evaporator 18. The system with an external source of make-up water can be thought of as an "open-loop system", which has advantages over a closed-loop system. For example, the open loop system is simpler in design than closed systems that may require a greater number of vacuum compartments. The open-loop design system also allows for easier integration with other components in the entire cooling system, and can be operated less expensively in some situations. The open-loop design can also exhibit a faster response to changes in various environmental conditions and material characteristics, such as water temperature; air temperature; and water vapor content.

As noted above, passage of the warm water through the evaporator results in the formation of a content of water vapor. According to the invention, the water vapor is directed to an absorber 30. The absorber is contained within the same vacuum chamber 20 as the evaporator. Not in accordance with the invention, conduits may be used to direct the water vapor to the absorber. However, a small pressure difference between the two units (i.e., higher pressure in the evaporator, lower pressure in the absorber) is usually sufficient to direct all of the water vapor to absorber 30.

In addition to accepting the water vapor, the absorber 30 also accommodates a flow of a concentrated desiccant 32. As described below, the desiccant is carried through, directly or indirectly, from a regenerator. The desiccant comprises a material that is capable of absorbing the water vapor. Absorption of the water vapor results in an increase in the temperature of the desiccant, while also diluting the desiccant. A number of desiccants may be employed. Non-limiting examples include lithium chloride (LiCl), lithium bromide (LiBr), calcium chloride (CaCl₂), zinc bromide; various alkali nitrates and ionic liquids; as well as activated carbon, zeolites, and silica gel. According to the invention, liquid desiccants, or those that can be prepared as liquids, e.g., aqueous solutions are employed. Specific examples include LiBr and LiCl. However, not in accordance with the invention, solid desiccants can be used in some instances, with steps being taken to ensure that the solid material be arranged for maximum contact with the water vapor.

As alluded to above, when the concentrated desiccant 32 flows through the absorber 30, the desiccant absorbs the water vapor from the evaporator, and becomes diluted. In some embodiments, vapor transfer to the desiccant is enhanced by lowering the temperature of the desiccant, using an optional heat exchanger mechanism 34, here incorporated into the absorber itself. Various types of heat exchangers may be used, and many comprise a series of heat exchange pipes, as depicted in FIG. 1. The presence of the heat exchanger may remove enough heat so that the temperature-rise in the desiccant is not as great as in the absence of an integrated heat exchanger, as mentioned below.

The diluted desiccant, having absorbed most or all of the water from the water vapor, is then routed to a regenerator 36, via any suitable conduit 38. As alluded to previously, the desiccant gives off moisture in the regenerator, so that the desiccant can be used again in the absorber. Many different types of regenerators can be used. In some embodiments, they are filled or partially filled with various types of packing media 40 (FIG. 1), through which the diluted desiccant travels in a path through the regenerator.

As a non-limiting illustration, a suitable nozzle (not shown) can be situated at or near the top end 44 of the regenerator, through which the desiccant can flow. The nozzle can spray droplets of the desiccant into the regenerator chamber, so that it travels in a downward path through the packing media, exiting at or near regenerator bottom 46. Movement of the desiccant is enhanced by exposure to a source of external air 42, which can be blown by a fan 48, for example, into the regenerator. The extended residence time of the desiccant through the packing ensures maximum, desired removal of water from the desiccant. In this manner, the desiccant is re-concentrated to a desired concentration value.

In some embodiments, the heated, diluted desiccant being transported from absorber 30 is contacted with at least one external heat source. This will increase the temperature of the desiccant, decreasing the amount of energy needed to remove water during passage through the regenerator. In some especially preferred embodiments, the external heat source is exhaust gas that exits gas turbine engine 14. As those skilled in the art understand, industrial gas turbines with a typical output rating of about 40 MW can emit/discharge large amounts of exhaust gas from one or more suitable thermal outlets, at temperatures in the range of about 400°C-550°C. Any portion of the high-temperature exhaust gas (waste heat) can be directed along pathway 50 to a suitable heat exchanger 52 or other type of recuperator device, thereby providing further heat to the desiccant. (The remainder 54 of exhaust from the power generation device is usually released to the atmosphere). Any excess moisture 56 exiting heat exchanger 52 can also be released to the atmosphere. Use of the exhaust gas provides an efficient means of lowering the amount of energy needed in the regeneration stage, to recycle the desiccant. In some embodiments, a direct conduit can extend from the external heat source to the desiccant, i.e., in the absence of heat exchanger 52.

The re-concentrated desiccant can then be directed back to the absorber, along pathway/conduit 58, with at least one pump 60 often being used to move the desiccant along the pathway. However, in many embodiments, pump 60 may not be necessary. This is due to the fact that the regenerator unit is maintained at atmospheric pressure, while the absorber is maintained under vacuum. The pressure difference is often sufficient, on its own, to move the desiccant solution from the regenerator to the absorber. The desiccant at this stage (being returned to the absorber) is at a temperature low enough to permit it to absorb additional water vapor within the absorber, thereby completing the cycle within the cooling system.

Additional features may also be present in the cooling system of FIG. 1. In some embodiments, a pump or compressor 62 may be used to pump out gasses that might interfere with operations going on within vacuum chamber 20. For example, the pump may be used to continuously remove non-dissolvable gasses (i.e., gasses other than water vapor), such as nitrogen, oxygen, and hydrogen.

In other embodiments, a cooling tower 64 can be incorporated into the absorber section of the cooling system. The cooling tower can be supplied from a feed water source 66, and can be connected to the absorber through entry line 68 and exit line 70. In this manner, the cooling tower circuit functions to remove additional heat resulting from the absorption of water vapor in the absorber. (Feed water source 66 can also be supplied from make-up water source 28, through appropriate conduits that are not illustrated).

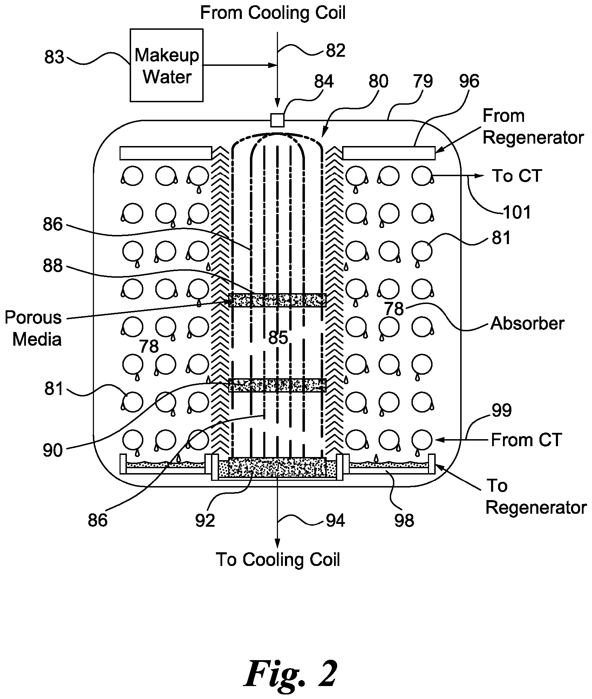

In some embodiments, particular types of evaporators and absorbers are preferred for the cooling system 10. FIG. 2 depicts a combined evaporator-absorber unit contained within a suitable vacuum chamber 79. The absorber 78 includes a set of heat transfer tubes 81, usually concentric, and surrounding evaporator 80, which includes a central region 85. The tubes within the absorber accelerate the absorption of water vapor from the evaporator.

The evaporator 80 includes at least one platform or layer of a porous material, such as paper, plastic, cellulose. In this illustrative embodiment (FIG. 2), three porous platforms are depicted as an illustration: upper platform 88, middle platform 90, and lower platform (e.g., at the base) 92. The platforms are positioned to accommodate the passage of water droplets formed from the warm water flowing from the cooling coil. The shape, thickness, and location of each platform will be determined by various factors. They include: the amount of warm water entering the evaporator; the shape and opening size of the supply nozzle (mentioned below); and the degree of mixing that is required to enhance water evaporation and temperature reduction in the water.

As shown in FIG. 2, the warm water from a cooling coil (not shown) is directed into the evaporator/absorber via conduit 82, in the manner described previously. A supply of make-up water 83 is also directed to the evaporator/absorber, by way of the same conduit as the warm water, or, not in accordance with the invention, by way of a separate conduit. The water is preferably introduced through nozzle 84.

As the water leaves the nozzle, it usually becomes super-heated, due to the sudden drop in pressure. The super-heated water breaks up into droplets 86, and some portion of the water is converted into vapor, due to vigorous boiling. As alluded to above for the illustrated embodiment, the water droplets first contact upper platform 88, and this initial impact can enhance evaporation, e.g., by reducing a temperature difference that may exist between the central "core" of each water droplet, and its outer surface.

In the illustrated embodiment of FIG. 2, the water droplets pass through a succession of porous platforms 88, 90, and 92. In this manner, a substantial amount of heat is released from the warm water, and the temperature of the water becomes cool enough for recirculation back to the cooling coil, via conduit 94. The platforms also advantageously minimize the amount of water that might otherwise splash into absorber 78. In this embodiment, the concentrated desiccant solution from the regenerator (not shown) is directed to the absorber 78, usually through conduit 96. Within vacuum chamber 79, the desiccant comes into contact with the water vapor from evaporator 80. In the manner described above, the desiccant absorbs the water vapor and becomes diluted, and can then be directed back to the regenerator through conduit/pathway 98, depicted in simple form. The heat from the absorption can be released to the cooling water from the cooling tower (not shown in this figure), as described previously. Pathway arrows 99 and 101 provide a simplistic depiction of a water pathway into and out of the absorber/evaporator system, respectively.

One key advantage for the evaporator depicted in FIG. 2 is that the central region 85 of evaporator 80 is free of heat exchange tubes, and is instead based on a stream of water droplets moving through a pattern of porous structures. In contrast, conventional evaporator systems require heat exchange tubes in the central area of the evaporator. The "tubeless" evaporator exhibits less thermal resistance than a conventional evaporator, since bundles of tubes can be the source of considerable thermal resistance. Elimination of the tubes can also reduce the cost of the evaporator.

Another advantage residing in the overall cooler system design of the present invention is the absence of a condenser for condensing water that is directed through the evaporator, as described previously. In this regard, the cooling system is simplified as compared to some of the prior art systems, which always require the use of a condenser device. The elimination of this type of condenser device can also decrease the overall cost of the system and process.

Yet anther advantage of this cooling system design lies in the fact that the thermal resistance between the processed air and the refrigerant (water) is smaller than that present for a conventional absorption chiller. This is due in part to the fact that the refrigerant directly contacts the coolant, without any intervening metallic walls. This low-resistance design is especially useful when air entering a power generation device has to be at a very low temperature.

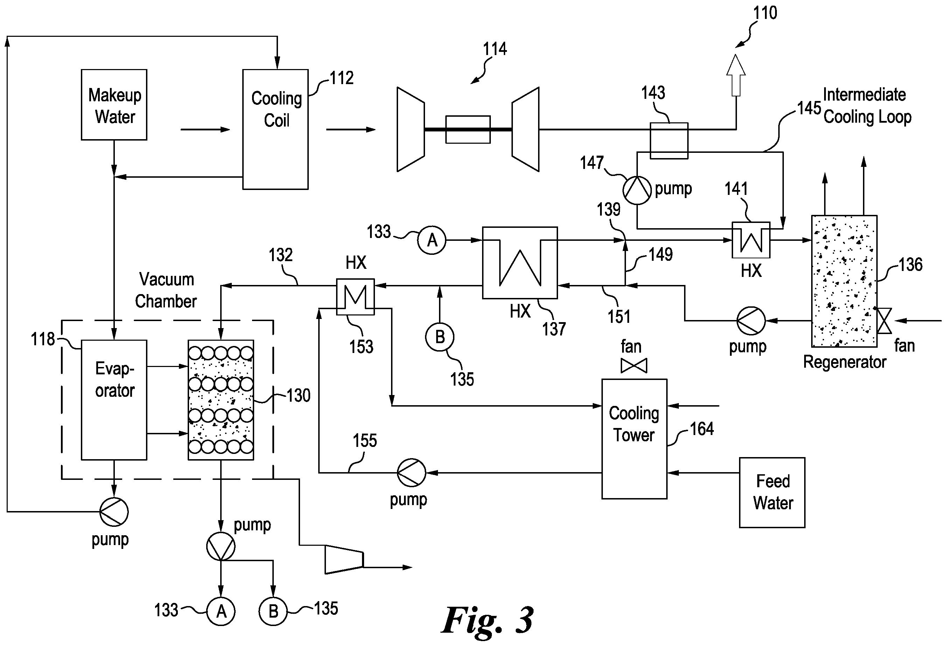

FIG. 3 is a schematic of an overall cooling system according to another embodiment of the invention. In this embodiment, multiple heat exchangers are employed along various pathways in the system. (In the figure, features and units that are similar to those of FIG. 1 may not be labelled). The cooling system 110 includes cooling coil 112, serving the function described previously, e.g., supplying cold air to gas turbine engine 114, or another type of engine or device requiring such air. The warm air and make-up water is directed through evaporator 118, contained within a vacuum chamber along with absorber 130. The absorber also accommodates the flow of desiccant 132, capable of absorbing water moisture. As noted previously, the desiccant becomes diluted, and often rises in temperature.

In the embodiment of FIG. 3, the relatively warm, diluted desiccant is divided into two streams, 133 and 135 (shown in truncated form at two locations of the figure, for the sake of simplicity). First stream 133 (the "A" stream) enters a first heat exchanger 137, where the desiccant absorbs additional heat from another desiccant stream 151, described below, which is a portion of the return-stream from the regenerator. (The content and amount of flow through the various streams in the cooling system are controlled in a manner which substantially balances water flow and desiccant flow into and out of the absorber and evaporator units).

The desiccant stream, now residing at a higher temperature after exiting heat exchanger 137, is directed along pathway 139, to a second heat exchanger 141. The second heat exchanger also receives heat from an external source 143, e.g., gas turbine exhaust, as in FIG. 1, thereby "boosting" the temperature of the desiccant, which can be advantageous. In some embodiments, as shown in FIG. 3, heat exchanger 141 and external heat source 143 can constitute an intermediate cooling loop 145, with the aid of pump 147.

After leaving heat exchanger 141, the diluted desiccant is then routed to regenerator 136. As described above for other embodiments, the desiccant comes into contact with external air in the regenerator, and gives off moisture, so that it can be re-used in its primary function. After leaving regenerator 136, the concentrated desiccant is divided into two streams, 149 and 151.

First return stream 149 is directed to pathway 139, to be mixed with the diluted regenerator material, prior to its entry into heat exchanger 141. Second return stream 151 is directed back to heat exchanger 137, to reject at least a portion of its heat content. The resulting stream from heat exchanger 137 is then combined with incoming, second stream 135 (the "B" stream noted above), and directed to third heat exchanger 153. As the desiccant is passed through this heat exchanger, it rejects additional heat to the fluid on the opposite side (the "cold side") of the heat exchanger. The relatively cold desiccant is then directed through pathway 132 to the absorber, to renew its function of absorbing water moisture. Heat released from heat exchanger 153 can be directed to cooling tower 164, which can also form a cooling loop 155 with this heat exchanger.

The embodiment of FIG. 3 can include other features as well, most of which were discussed previously. For example, a pump can be used to remove non-dissolvable gasses from the vacuum chamber. Also, as explained with reference to FIG. 2, the absorber and evaporator can be effectively combined in some designs. Moreover, in some cases, not in accordance with the invention, the cooling coil (in this embodiment or that of FIG. 1) can be replaced with a direct-contact heat exchanger, allowing air to directly contact the cooling water. The embodiment of FIG. 3 is advantageous in some circumstances, because the multiple heat exchange units can more efficiently utilize excess heat that is generated throughout the cooling system. Another embodiment of the invention relates to gas turbine engines. As those skilled in the art understand, and in reference to FIG. 1, engines of this type usually include a compressor 16, in communication with a combustor 19, and a power-delivery device 21, such as a turbine, in flow-communication with the compressor. The gas turbine further includes a cooling system like that described above, coupled in flow communication with an inlet region of compressor 16. The cooling coil effectively provides chilled air to the compressor, resulting in greater engine efficiency. Moreover, in some embodiments, excess exhaust generated by the gas turbine engine can be used to heat a desiccant material (e.g., via heat exchanger 52) that is being regenerated for use in the absorber 30 of the cooling system. Use of the excess heat from the turbine engine for this purpose can also increase the efficiency of the cooling system. As noted previously, methods for providing relatively cool air, or chilled air, to the gas turbine engine, using the cooling system described herein, constitutes another embodiment of the invention.

## Claims

1. A cooling system (10) for providing chilled air, comprising
(a) a cooling coil (12) configured to accept air at a higher temperature and emit air at a lower temperature by passage through a flow of coolant water in the cooling coil (12), resulting in a content of relatively warm water;
(b) an evaporator (18) contained within a vacuum chamber (20), and a conduit (22) configured to channel the relatively warm water from the cooling coil (12) to the evaporator (22); said evaporator (18) configured to allow the passage of the relatively warm water therethrough, and to absorb heat from the warm water, thereby reducing the temperature of the water, while also forming a content of water vapor;
(c) an absorber (30) contained in the vacuum chamber (20), and configured to accept the water vapor formed in the evaporator (18); while also configured to accommodate a flow of a concentrated desiccant (32) that is capable of absorbing the water vapor and thereby becoming diluted and heated;
(d) a regenerator (36) that is capable of receiving at least a portion of the diluted and heated desiccant (32) , said regenerator (36) configured to accept and direct external air (42) to the desiccant (32) , thereby causing a release of at least some of the water content in the desiccant, to the atmosphere, so as to re-concentrate the desiccant to a selected concentration value;
wherein it further comprises an external source of make-up water (28) in communication with the cooling coil (12), configured to replenish water lost during operation of the cooling system (10), wherein the make-up water combines with the relatively warm water exiting the cooling coil (12) via the conduit (22) and the combined flow enters the evaporator (18),
and that the system (10) lacks of a condenser for condensing water that is directed through the evaporator (18).

2. The cooling system of claim 1, further comprising:
at least one heat exchanger (34) that is capable of accepting the re-concentrated desiccant and lowering the temperature of the desiccant to a temperature that enhances the transfer of water vapor formed in the evaporator (18) to the desiccant , said heat exchanger being in communication with the absorber (30), to allow the return of the lower-temperature desiccant (32) to the absorber (30).

3. The cooling system of claim 1 or 2, further comprising pumping means for removing non-dissolvable gasses from the vacuum chamber (20).

4. The cooling system of claim 1, 2 or 3, wherein the evaporator (18) is configured to absorb enough heat from the warm water to lower the temperature of the water by at least about 2°C.

5. The cooling system of claim 4, comprising means for returning the lower-temperature water to the cooling coil (12).

6. The cooling system any of claims 1 to 5, further comprising a power generation device that receives the chilled air as part of a power generation cycle.

7. The cooling system of claim 6, wherein the power generation device includes a thermal outlet for discharging waste heat.

8. The cooling system of claim 7, wherein the thermal outlet is configured to direct the waste heat along a pathway (50) to a heat exchanger (52) or another type of recuperator device, thereby providing further heat to the desiccant(32).

9. The cooling system of claim 7 or 8, wherein the thermal outlet is capable of providing heat at a temperature in the range of about 400°C to about 550°C.

10. The cooling system of any of claims 1 to 9, wherein the desiccant (32) comprises at least one material selected from the group consisting of lithium chloride (LiCl), lithium bromide (LiBr), calcium chloride (CaCl2), zinc bromide, alkali nitrates, ionic liquids; activated carbon, zeolites, and silica gel.

11. The cooling system of any of claims 1 to 10, wherein the evaporator (18) is configured to function in the absence of a cooling coil (12).

12. The cooling system of any of claim 1 to 11, wherein the evaporator (18) is configured to include at least one platform (88, 90, 92) comprising a porous medium, positioned to accommodate the passage of water droplets formed from the relatively warm water channeled from the cooling coil (12) to the evaporator (22) via the conduit (22).

13. A gas turbine engine, comprising:
I) a compressor;
II) a combustor;
III) a turbine, coupled in flow communication with the compressor; and
IV) a cooling system as claimed in any of the preceding claims coupled in flow communication with an inlet region of the compressor, so as to provide cooling air to the inlet region.

14. A method for providing chilled air to a gas turbine engine that includes a compressor (16); a combustor (19); and a turbine (21) coupled in flow communication with the compressor (16), comprising the steps of:
(i) flowing relatively warm air through coolant water in a cooling coil (12), and then into an inlet in the compressor (16), wherein the cooling coil (12) transforms the relatively warm air into chilled air; and wherein the interaction of the warm air with the coolant water transforms the water into relatively warm water;
(ii) channel the relatively warm water via a conduit (22) from the cooling coil (12) to an evaporator (18) and directing the relatively warm water through the evaporator (18) contained within a vacuum chamber (20), and in communication with the cooling coil (12); wherein the evaporator (18) is configured to allow the passage of the relatively warm water therethrough, and to absorb heat from the warm water, thereby reducing the temperature of the water so that it can be directed back to the cooling coil (12); while also forming a content of water vapor;
(iii) directing the water vapor from the evaporator (18) to an absorber (30) contained in the vacuum chamber (20); while also directing a concentrated desiccant (32) to the absorber (30), so that the desiccant (32) absorbs the water vapor and becomes diluted and heated with a content of water;
(iv) directing at least a portion of the diluted and heated desiccant (32) to a regenerator (36) and exposing the desiccant (32) to external air directed into the regenerator (36) , so as to cause a release of at least some of the water content in the desiccant (32) , thereby re-concentrating the desiccant (32) to a selected concentration value; and
(v) directing the re-concentrated desiccant (32) to the absorber (30),
replenish water lost during cooling from an external source of make-up water (28) in communication with the cooling coil (12), wherein the make-up water combines with the relatively warm water exiting the cooling coil (12) via the conduit (22) and the combined flow enters the evaporator (18), wherein water that is directed through the evaporator (18) is not condensed.

## Patentansprüche

1. Kühlsystem (10) zum Bereitstellen gekühlter Luft, umfassend
(a) eine Kühlspule (12), die dazu ausgebildet ist, Luft mit einer höheren Temperatur aufzunehmen und Luft mit einer niedrigeren Temperatur abzugeben, indem sie durch einen Strom von Kühlwasser in der Kühlspule (12) geleitet wird, was zu einem Inhalt von relativ warmem Wasser führt;
(b) einen Verdampfer (18), der in einer Vakuumkammer (20) enthalten ist, und eine Leitung (22), die dazu konfiguriert ist, das relativ warme Wasser von der Kühlspule (12) zum Verdampfer (22) zu leiten; wobei der Verdampfer (18) so konfiguriert ist, dass er den Durchgang von relativ warmem Wasser ermöglicht und Wärme aus dem warmen Wasser absorbiert, wodurch die Temperatur des Wassers gesenkt wird, während gleichzeitig ein Gehalt an Wasserdampf gebildet wird;
(c) einen Absorber (30), der in der Vakuumkammer (20) enthalten ist und derart konfiguriert ist, dass er den im Verdampfer (18) gebildeten Wasserdampf aufnimmt; wobei er ferner so konfiguriert ist, dass er einen Strom eines konzentrierten Trockenmittels (32) aufnehmen kann, das in der Lage ist, den Wasserdampf zu absorbieren und ihn dadurch zu verdünnen und zu erwärmen;
(d) einen Regenerator (36), der in der Lage ist, mindestens einen Teil des verdünnten und erwärmten Trockenmittels (32) aufzunehmen, wobei der Regenerator (36) so konfiguriert ist, dass er Außenluft (42) aufnimmt und zum Trockenmittel (32) leitet, wodurch eine Freisetzung von mindestens einem Teil des Wassergehalts im Trockenmittel an die Atmosphäre bewirkt wird, um das Trockenmittel wieder auf einen ausgewählten Konzentrationswert zu konzentrieren;
wobei er ferner eine externe Quelle für Zusatzwasser (28) in Verbindung mit der Kühlspule (12) umfasst, die so konfiguriert ist, dass sie während des Betriebs des Kühlsystems (10) verlorenes Wasser wieder auffüllt, wobei sich das Zusatzwasser mit dem relativ warmen Wasser kombiniert, das die Kühlspule (12) über die Leitung (22) verlässt, und der kombinierte Strom in den Verdampfer (18) gelangt,
und dass das System (10) keinen Kondensator zum Kondensieren von Wasser aufweist, das durch den Verdampfer (18) geleitet wird.

2. Kühlsystem nach Anspruch 1, ferner umfassend:
mindestens einen Wärmetauscher (34), der das erneut konzentrierte Trockenmittel aufnehmen und die Temperatur des Trockenmittels auf eine Temperatur absenken kann, die die Übertragung des im Verdampfer (18) gebildeten Wasserdampfs auf das Trockenmittel verbessert, wobei der Wärmetauscher mit dem Absorber (30) in Verbindung steht, um die Rückführung des Trockenmittels (32) mit niedrigerer Temperatur zum Absorber (30) zu ermöglichen.

3. Kühlsystem nach Anspruch 1 oder 2, ferner umfassend Pumpmittel zum Entfernen nicht löslicher Gase aus der Vakuumkammer (20).

4. Kühlsystem nach Anspruch 1, 2 oder 3, wobei der Verdampfer (18) so konfiguriert ist, dass er genügend Wärme aus dem warmen Wasser aufnimmt, um die Temperatur des Wassers um mindestens etwa 2 °C zu senken.

5. Kühlsystem nach Anspruch 4, umfassend Mittel zum Rückführen des Wassers mit niedrigerer Temperatur zur Kühlspule (12).

6. Kühlsystem nach einem der Ansprüche 1 bis 5, ferner umfassend eine Stromerzeugungsvorrichtung, die die gekühlte Luft als Teil eines Stromerzeugungszyklus empfängt.

7. Kühlsystem nach Anspruch 6, wobei die Stromerzeugungsvorrichtung einen Wärmeauslass zur Abfuhr der Abwärme einschließt.

8. Kühlsystem nach Anspruch 7, wobei der Wärmeauslass so konfiguriert ist, dass er die Abwärme über einen Weg (50) zu einem Wärmetauscher (52) oder einer anderen Art von Rekuperatorvorrichtung leitet und dadurch dem Trockenmittel (32) weitere Wärme zuführt.

9. Kühlsystem nach Anspruch 7 oder 8, wobei der Wärmeauslass in der Lage ist, Wärme bei einer Temperatur im Bereich von etwa 400 °C bis etwa 550 °C bereitzustellen.

10. Kühlsystem nach einem der Ansprüche 1 bis 9, wobei das Trockenmittel (32) mindestens ein Material umfasst, das aus der Gruppe ausgewählt ist, die aus Lithiumchlorid (LiCl), Lithiumbromid (LiBr), Calciumchlorid (CaCl2), Zinkbromid, Alkalinitraten und ionischen Flüssigkeiten; Aktivkohle, Zeolithe und Kieselgel besteht.

11. Kühlsystem nach einem der Ansprüche 1 bis 10, wobei der Verdampfer (18) so konfiguriert ist, dass er auch ohne Kühlspule (12) funktioniert.

12. Kühlsystem nach einem der Ansprüche 1 bis 11, wobei der Verdampfer (18) so konfiguriert ist, dass er mindestens eine Plattform (88, 90, 92), umfassend ein poröses Medium, einschließt, die so positioniert ist, dass sie den Durchgang von Wassertropfen ermöglicht, die aus dem relativ warmen Wasser gebildet werden, das von der Kühlspule (12) über die Leitung (22) zum Verdampfer (22) geleitet wird.

13. Gasturbinentriebwerk, umfassend:
I) einen Verdichter;
II) eine Brennkammer;
III) eine Turbine, die in Strömungsverbindung mit dem Verdichter steht; und
IV) ein Kühlsystem nach einem der vorstehenden Ansprüche, das in Strömungsverbindung mit einem Einlassbereich des Verdichters steht, um den Einlassbereich mit Kühlluft zu versorgen.

14. Verfahren zum Bereitstellen gekühlter Luft für ein Gasturbinentriebwerk, das Folgendes einschließt: einen Verdichter (16); eine Brennkammer (19); und eine Turbine (21), die in Strömungsverbindung mit dem Verdichter (16) gekoppelt ist, umfassend die Schritte:
(i) Strömen relativ warmer Luft durch Kühlwasser in einer Kühlspule (12) und dann in einen Einlass im Verdichter (16), wobei die Kühlspule (12) die relativ warme Luft in gekühlte Luft umwandelt; und wobei die Wechselwirkung der warmen Luft mit dem Kühlwasser das Wasser in relativ warmes Wasser umwandelt;
(ii) Kanalisieren des relativ warmen Wassers über eine Leitung (22) von der Kühlspule (12) zu einem Verdampfer (18) und Leiten des relativ warmen Wassers durch den Verdampfer (18), der in einer Vakuumkammer (20) enthalten ist und mit der Kühlspule (12) in Verbindung steht; wobei der Verdampfer (18) so konfiguriert ist, dass er den Durchgang von relativ warmem Wasser ermöglicht und Wärme aus dem warmen Wasser aufnimmt, wodurch die Temperatur des Wassers abgesenkt wird, sodass es zurück zur Kühlspule (12) geleitet werden kann; während gleichzeitig ein Gehalt an Wasserdampf entsteht;
(iii) Leiten des Wasserdampfs vom Verdampfer (18) zu einem Absorber (30), der in der Vakuumkammer (20) enthalten ist; während gleichzeitig ein konzentriertes Trockenmittel (32) zum Absorber (30) geleitet wird, so dass das Trockenmittel (32) den Wasserdampf absorbiert und mit einem Wassergehalt verdünnt und erwärmt wird;
(iv) Leiten von mindestens einem Teil des verdünnten und erwärmten Trockenmittels (32) zu einem Regenerator (36) und Aussetzen des Trockenmittels (32) gegenüber der in den Regenerator (36) geleiteten Außenluft, um eine Freisetzung von mindestens einem Teil des Wassergehalts im Trockenmittel (32) zu bewirken und dadurch das Trockenmittel (32) wieder auf einen ausgewählten Konzentrationswert zu konzentrieren; und
(v) Leiten des erneut konzentrierten Trockenmittels (32) zum Absorber (30), Auffüllen von während der Kühlung verloren gegangenem Wasser aus einer externen Zusatzwasserquelle (28), die mit der Kühlspule (12) in Verbindung steht, wobei sich das Zusatzwasser mit dem relativ warmen Wasser kombiniert, das die Kühlspule (12) über die Leitung (22) verlässt, und der kombinierte Strom in den Verdampfer (18) gelangt, wobei Wasser, das durch den Verdampfer (18) geleitet wird, nicht kondensiert ist.

## Revendications

1. Système de refroidissement (10) permettant de fournir de l'air réfrigéré, comprenant
(a) un serpentin de refroidissement (12) conçu pour accepter de l'air à une température plus élevée et émettre de l'air à une température plus basse par passage à travers un écoulement d'eau de refroidissement dans le serpentin de refroidissement (12), résultant en un contenu d'eau relativement chaude ;
(b) un évaporateur (18) contenu à l'intérieur d'une chambre à vide (20), et un conduit (22) conçu pour canaliser l'eau relativement chaude à partir du serpentin de refroidissement (12) vers l'évaporateur (22) ; ledit évaporateur (18) étant conçu pour permettre le passage de l'eau relativement chaude et pour absorber la chaleur de l'eau chaude, réduisant ainsi la température de l'eau, tout en formant également un contenu de vapeur d'eau ;
(c) un absorbeur (30) contenu dans la chambre à vide (20), et conçu pour accepter la vapeur d'eau formée dans l'évaporateur (18) ; tout en étant également conçu pour accueillir un écoulement de déshydratant concentré (32) qui est en mesure d'absorber la vapeur d'eau et ainsi de se diluer et se réchauffer ;
(d) un régénérateur (36) qui est en mesure de recevoir au moins une partie du déshydratant dilué et chauffé (32), ledit régénérateur (36) étant conçu pour accepter et diriger de l'air extérieur (42) vers le déshydratant (32), provoquant ainsi la libération d'au moins une partie de l'eau contenue dans le déshydratant vers l'atmosphère, de manière à concentrer de nouveau le déshydratant à une valeur de concentration sélectionnée ;
dans lequel il comprend en outre une source externe d'eau d'appoint (28) en communication avec le serpentin de refroidissement (12), conçue pour reconstituer l'eau perdue pendant le fonctionnement du système de refroidissement (10), dans lequel l'eau d'appoint se combine à l'eau relativement chaude sortant du serpentin de refroidissement (12) par l'intermédiaire du conduit (22) et l'écoulement combiné pénètre dans l'évaporateur (18),
et le système (10) est dépourvu d'un condenseur pour condenser l'eau qui est dirigée à travers l'évaporateur (18).

2. Système de refroidissement selon la revendication 1, comprenant en outre :
au moins un échangeur de chaleur (34) qui est en mesure d'accepter le déshydratant concentré de nouveau et d'abaisser la température du déshydratant à une température qui améliore le transfert de la vapeur d'eau formée dans l'évaporateur (18) vers le déshydratant, ledit échangeur de chaleur étant en communication avec l'absorbeur (30), pour permettre le retour du déshydratant (32) à plus basse température vers l'absorbeur (30).

3. Système de refroidissement selon la revendication 1 ou 2, comprenant en outre un moyen de pompage pour éliminer les gaz non solubles de la chambre à vide (20).

4. Système de refroidissement selon la revendication 1, 2 ou 3, dans lequel l'évaporateur (18) est conçu pour absorber suffisamment de chaleur de l'eau chaude pour abaisser la température de l'eau d'au moins 2 °C environ.

5. Système de refroidissement selon la revendication 4, comprenant un moyen pour renvoyer l'eau à plus basse température vers le serpentin de refroidissement (12).

6. Système de refroidissement selon l'une quelconque des revendications 1 à 5 comprenant en outre un dispositif de production d'énergie qui reçoit l'air réfrigéré dans le cadre d'un cycle de production d'énergie.

7. Système de refroidissement selon la revendication 6, dans lequel le dispositif de production d'énergie
comporte une sortie thermique pour évacuer la chaleur résiduelle.

8. Système de refroidissement selon la revendication 7, dans lequel la sortie thermique est conçue pour diriger la chaleur résiduelle le long d'une voie (50) vers un échangeur de chaleur (52) ou un autre type de dispositif de récupération, fournissant ainsi une chaleur supplémentaire au déshydratant (32).

9. Système de refroidissement selon la revendication 7 ou 8, dans lequel la sortie thermique est en mesure de fournir de la chaleur à une température comprise entre 400 °C et 550 °C.

10. Système de refroidissement selon l'une quelconque des revendications 1 à 9, dans lequel le déshydratant (32) comprend au moins un matériau sélectionné parmi le groupe constitué du chlorure de lithium (LiCl), du bromure de lithium (LiBr), du chlorure de calcium (CaCl2), du bromure de zinc, de nitrates alcalins, de liquides ioniques ; de charbon actif, de zéolithes et de gel de silice.

11. Système de refroidissement selon l'une quelconque des revendications 1 à 10, dans lequel l'évaporateur (18) est conçu pour fonctionner en l'absence d'un serpentin de refroidissement (12).

12. Système de refroidissement selon l'une quelconque des revendications 1 à 11, dans lequel l'évaporateur (18) est conçu pour comporter au moins une plate-forme (88, 90, 92) comprenant un milieu poreux, positionné pour accueillir le passage des gouttelettes d'eau formées de l'eau relativement chaude canalisée à partir du serpentin de refroidissement (12) vers l'évaporateur (22) par l'intermédiaire du conduit (22).

13. Moteur de turbine à gaz comprenant :
I) un compresseur ;
II) une chambre de combustion ;
III) une turbine, accouplée en communication d'écoulement avec le compresseur ; et
IV) un système de refroidissement selon l'une quelconque des revendications précédentes, accouplé en communication d'écoulement avec une zone d'entrée du compresseur, de manière à fournir de l'air de refroidissement à la zone d'entrée.

14. Procédé permettant de fournir de l'air réfrigéré à un moteur à turbine à gaz qui comporte un compresseur (16) ; une chambre de combustion (19) ; et une turbine (21) accouplée en communication d'écoulement avec le compresseur (16), comprenant les étapes consistant à :
(i) faire s'écouler de l'air relativement chaud à travers de l'eau de refroidissement dans un serpentin de refroidissement (12), et ensuite dans une entrée du compresseur (16), dans lequel le serpentin de refroidissement (12) transforme l'air relativement chaud en air réfrigéré ; et dans lequel l'interaction de l'air chaud avec l'eau de refroidissement transforme l'eau en eau relativement chaude ;
(ii) canaliser l'eau relativement chaude par l'intermédiaire d'un conduit (22) à partir du serpentin de refroidissement (12) vers un évaporateur (18) et diriger l'eau relativement chaude à travers l'évaporateur (18) contenu à l'intérieur d'une chambre à vide (20), et en communication avec le serpentin de refroidissement (12) ; dans lequel l'évaporateur (18) est conçu pour permettre le passage de l'eau relativement chaude à travers celui-ci, et pour absorber la chaleur de l'eau chaude, réduisant ainsi la température de l'eau de sorte qu'elle peut être renvoyée vers le serpentin de refroidissement (12) ; tout en formant également un contenu de vapeur d'eau ;
(iii) diriger la vapeur d'eau à partir de l'évaporateur (18) vers un absorbeur (30) contenu dans la chambre à vide (20) ; tout en dirigeant également un déshydratant concentré (32) vers l'absorbeur (30), de sorte que le déshydratant (32) absorbe la vapeur d'eau et se dilue et se réchauffe avec un contenu d'eau ;
(iv) diriger au moins une partie du déshydratant (32) dilué et chauffé vers un régénérateur (36) et exposer le déshydratant (32) à de l'air extérieur dirigé dans le régénérateur (36), de manière à provoquer une libération d'au moins une partie de l'eau contenue dans le déshydratant (32), ce qui concentre de nouveau le déshydratant (32) à une valeur de concentration sélectionnée ; et
(v) diriger le déshydratant concentré de nouveau (32) vers l'absorbeur (30), reconstituer l'eau perdue pendant le refroidissement à partir d'une source externe d'eau d'appoint (28) en communication avec le serpentin de refroidissement (12), dans lequel l'eau d'appoint se combine à l'eau relativement chaude sortant du serpentin de refroidissement (12) par l'intermédiaire du conduit (22) et l'écoulement combiné entrant dans l'évaporateur (18), dans lequel l'eau dirigée à travers l'évaporateur (18) n'est pas condensée.
